## Europäisches Patentamt

## European Patent Office

## Office européen des brevets

(19)

(11) **EP 1 323 722 A1**

(12) **EUROPEAN PATENT APPLICATION**

(43) Date of publication:
02.07.2003 Bulletin 2003/27

(51) Int Cl.7: **C07F 7/18**

(21) Application number: 02028726.4

(22) Date of filing: 20.12.2002

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: 25.12.2001 JP 2001391124

(71) Applicant: **NIPPON SHOKUBAI CO., LTD.**
**Osaka-shi, Osaka 541 (JP)**

(72) Inventors:
- **Kurusu, Akira**
  **Kyoto-shi, Kyoto 610-1102 (JP)**
- **Shimasaki, Yuji**
  **Otsu-shi, Shiga 520-0221 (JP)**
- **Ugamura, Shukichi**
  **Suita-shi, Osaka 564-0035 (JP)**

(74) Representative: **Müller-Boré & Partner**
**Patentanwälte**
**Grafinger Strasse 2**
**81671 München (DE)**

(54) **Process for producing alkoxysilanes**

(57)    The present invention provides a process for producing an alkoxysilane, safely and constantly on a commercial scale, from an inexpensive and readily available raw material, via a completely new reaction route, and in an energy-saving manner as well as under a low environmental load.

The process of the present invention is a process comprising the reaction of an inorganic compound having Si-O bonds with an alcohol in the presence of an alkali metal compound and/or an alkaline earth metal compound.

**Description**

The present invention relates to a process for producing an alkoxysilane efficiently in a commercial scale.

Alkoxysilanes are compounds valuable and useful as silylating reagents and as industrial raw materials for use in the silicon chemistry. Alkoxysilanes, as they can be purified relatively easily, are also useful as a starting material for high-purity silica that can be prepared by hydrolysis thereof.

Industrial processes of manufacturing an alkoxysilane known in the art include a method of reacting silicon tetrachloride with an alcohol (Japanese Unexamined Patent Publication No.62-114991). However, the method has disadvantages as industrial process, for example, in that the reaction generates hydrogen chloride as a side product leading to corrosion of the reaction vessel, and that hydrogen chloride generates water in reaction with the raw alcohol, which in turn reacts with the desired compound, alkoxysilane, reducing the yield thereof.

Alternatively as the industrial process of manufacturing an alkoxysilane is known a method of reacting metallic silicon with an alcohol (Japanese Unexamined Patent Publication No.2000-178283). Metallic silicon employed as a raw material in the method above is generally produced by heating a mixture of silica and carbon in an electric furnace at an extremely high temperature to reduce the silica. Accordingly, an enormous amount of energy is required for the production of metallic silicon, and thus the method above is inevitably poor in energy efficiency.

Alternatively, as the methods for producing an alkoxysilane directly from an inorganic compound having Si-O bonds are known in the art methods to prepare the alkoxysilane by reacting silica with an alkyl carbonate with use of an alkali metal element or an alkaline earth metal element as a catalyst (Japanese Patent No.3026371, and Japanese Unexamined Patent Publication No.2001-114786). These methods are more advantageous from a viewpoint of the energy efficiency, since metallic silicon is not involved. But these methods too have disadvantages in that the raw material, alkyl carbonate, is relatively expensive and that carbon dioxide is generated during the reaction, and are yet to be improved before being accepted as an industrial process from a viewpoint of cost and environmental protection.

An object of the invention is to provide a method that can overcome the disadvantages described above in the conventional processes, and that yields alkoxysilanes safely and constantly, from an inexpensive and readily-available raw material and via a completely new reaction route, in an energy-effective manner and under an extremely low environmental load.

The object is accomplished by the process for producing an alkoxysilane of the present invention comprising a reaction of an inorganic compound having Si-O bond with alcohols in the presence of an alkali metal element and/or an alkaline earth metal element.

The reaction is recommended to be carried out at a temperature of not lower than 200°C, more preferably not lower than the critical temperature of the alcohol. Further, the reaction is preferably carried out at the temperature described above and under a pressure of not lower than $0.1 \times Pc$ (MPa), when the critical pressure of the alcohol is designated as Pc (MPa). In the present invention, the pressure above means real pressure and not gauge pressure.

The alcohol is favorably methanol. Further, the process is particularly favorable for production of tetramethoxysilane.

After intensive studies on new methods for producing an alkoxysilane from an inorganic compound having Si-O bonds and an alcohol, the present inventors have found that an alkoxysilane can be prepared by reaction of an inorganic compound having Si-O bonds with an alcohol in the presence of an alkali metal element and/or an alkaline earth metal element.

The inorganic compound having Si-O bonds in the present invention(hereinafter, referred to as "inorganic compound A") may be any inorganic compound that contains bonds between silicon and oxygen atoms. Examples of inorganic compound A include oxides such as $SiO_2$ (silica), compound oxides such as silica alumina, aluminosilicate salts, zeolites, etc., and silica is most favorable. As the silica may be used natural minerals such as silica rock, silica sand, diatomaceous earth, quartz; ash of plant containing silicon; volcanic ash; silicate; sodium silicate; silica gel derived from silica sol and the like.

The amount of the Si-O bonds in inorganic compound A is not particularly limited and, when the SiO bonds present are expressed as silica content, the silica content is preferably not less than 50 % by weight as silica, and more preferably not less than 90% by weight.

The alkali metal element and/or the alkaline earth metal element used in the present invention are, for example, Li, Na, K, Rb, Cs, Fr, Be, Mg, Ca, Sr, Ba, and Ra, preferably Na, K, Rb, Cs, and Ba, and especially preferably K. The alkali metal element and/or the alkaline earth metal element may have any form of chemical bonds when they are used in the reaction between inorganic compound A and alcohol. Moreover, the alkali metal element and/or the alkaline earth metal element may be introduced into the reaction system by using a chemical substance that contains the element. Examples of the chemical substance that contains the alkali metal element and/or the alkaline earth metal element include elementary substances and compounds containing the element (e.g., hydroxides, oxides, halides, alkoxides, organic acid salts, nitrates, sulfates, silicates, carbonates, etc.). Sodium hydroxide, potassium hydroxide, sodium carbonate, and potassium carbonate are easy to handle with and thus favorable among the materials above.

The substance containing the alkali metal element and/or the alkaline earth metal element is preferably brought into contact sufficiently with inorganic compound A when it is supplied into the reaction system containing inorganic compound A and alcohol. For example, the method wherein the substance containing the alkali metal element and/or the alkaline earth metal element is first dissolved or dispersed in a solvent, and then after addition of inorganic compound A, the solvent is thoroughly evaporated may be used as such a contacting method. Favorable solvents are water and alcohol.

The amount of an alkali metal element and/or an alkaline earth metal element used is preferably 0.1 to 20 mol %, and more preferably 0.5 to 10 mol %, with respect to 100 mol % of silicon atoms in inorganic compound A to which these element is added. When the amount of the alkali metal element and/or the alkaline earth metal element used is less than 0.1 mol %, the desirable reaction proceeds more slowly. On the other hand, when the amount is more than 20 mol %, acceleration of the reaction by the metal element reaches a plateau and the desirable reaction does not proceed any faster.

Sometimes, the raw material contains the alkali element and alkaline earth metal element per se, for example, when a ash of plant containing silicon is used as inorganic compound A. These alkali metal element and alkaline earth metal element can also serve as a material to promote the reaction of the present invention. In such a case, the alkali metal element and/or the alkaline earth metal element to be used is favorably adjusted so that the total amount of the alkali metal element and the alkaline earth metal element including those in the raw material falls in the range described above.

The alcohol used in the present invention is a compound that has an alcoholic hydroxyl group, and examples thereof include aliphatic alcohol and aromatic alcohol. Each of the alcohol has preferably 1 to 4 carbons, and more preferably 1 to 2 carbons. Specific examples of the alcohol include methanol, ethanol, n-propanol, iso-propanol, n-butanol, iso-butanol and the like. Methanol and ethanol are preferable and methanol is most preferable.

Alkoxyl group of the alkoxysilane of the present invention is spontaneously determined by the kind of the alcohol. Examples of the alkoxysilane that can be obtained by the process of the present invention include, but are not limited to, methoxysilane, dimethoxysilane, trimethoxysilane, tetramethoxysilane, ethoxysilane, diethoxysilane, triethoxylsilane, tetraethoxysilane, etc. The process of the present invention is especially suitable for production of tetraalkoxysilane such as tetramethoxysilane and tetraethoxysilane.

The reaction of inorganic compound A with the alcohol in the process of the present invention does not proceed at a sufficiently high rate at a low temperature, leading to decrease in productivity. On the other hand, at an excessively higher temperature, side reactions of the alcohol such as dehydration and dehydrogenation became significant. Accordingly, the aforementioned reaction in the present invention is preferably carried out at a temperature of not lower than 200°C. Moreover, the reaction temperature is recommended to be determined according to the kind of the alcohol to be used. More specifically, the temperature of the reaction described above is preferably not lower than the critical temperature of the alcohol, and more preferably not lower than the critical temperature + 100°C. On the other hand, the upper limit of the reaction temperature is preferably 500°C, and more preferably 450°C.

Further, increasing the pressure of the reaction may accelerate the reaction above. Thus, in the case where the reaction is carried out at the temperature described above, the reaction pressure is preferably not lower than $0.1 \times Pc$ (MPa), when the critical pressure of the alcohol is designated as Pc (MPa), and more preferably not lower than $0.3 \times Pc$ (MPa). Accordingly, the reaction may be carried out both at a temperature of not lower than the critical temperature of the alcohol and under a pressure of not lower than the critical pressure thereof, i.e., at the supercritical state of the alcohol.

By the way, the supercritical state of a material is a state wherein the material is present under a temperature of not lower than its own critical temperature and a pressure of not lower than its own critical pressure (i.e., a state wherein the material is present in supercritical fluid and does not condensate even when more pressurized). The critical points of typical alcohols usable in the present invention are summarized in TABLE 1.

TABLE 1

| Alcohol | Critical Points | |
|---|---|---|
| | Temperature (°C) | Pressure (MPa) |
| Methanol | 240 | 8. 1 |
| Ethanol | 241 | 6. 4 |
| n-Propanol | 263. 6 | 5. 2 |
| iso-Propanol | 235. 2 | 4. 8 |

TABLE 1   (continued)

| Alcohol | Critical Points | |
|---|---|---|
| | Temperature (°C) | Pressure (MPa) |
| n-Butanol | 289. 8 | 4. 4 |
| iso-Butanol | 274. 6 | 4. 3 |

In the case where methanol is used as the alcohol of the present invention, the reaction is preferably carried out, for example, at a temperature of not lower than 240°C, more preferably not lower than 300°C, further more preferably not lower than 340°C, and not higher than 450°C, and under a pressure of not lower than 0.1 MPa, more preferably not lower than 0.81MPa, even more preferably not lower than 2.43 MPa, especially preferably not lower than 4 MPa, and not higher than 9 MPa.

The process of the present invention may be carried out in the following manner. First, a mixture of a material containing an alkali metal element and/or an alkaline earth metal element and inorganic compound A (hereinafter, referred to as "inorganic compound B") is filled in a reaction tube, and is dried sufficiently while heating up to a predetermined temperature, with an inert gas passing through the reaction tube. Subsequently, an alcohol is continuously supplied into the reaction tube containing inorganic compound B with the reaction condition of a predetermined temperature and a predetermined pressure, and brought into conduct therewith to carry out the reaction to produce an alkoxysilane. The feeding rate of the alcohol is preferably 1 to 200 g/hr per 1 g (expressed by weight before drying described above) of inorganic compound B packed in the reaction tube at the beginning of the reaction. The alcohol may be previously diluted with a substance inert to the reaction (e.g., nitrogen, helium, hydrocarbons) when supplied into the reaction tube. Moreover, alkoxysilanes may be prepared continuously in a fluidized bed reactor into which inorganic compound B is successively being supplied.

According to the process in the present invention, an alkoxysilane can be produced directly from an inorganic compound having Si-O bonds and an alcohol without a need for producing an energy intensive intermediate compound, metallic silicon.

Further, the process of the present invention is advantageous using inexpensive and easily-available alcohols which are substantially free of degradation during the reaction condition, as compared with the conventional processes for producing an alkoxysilane from silica and an alkylcarbonate. Moreover, according to this invention an alkoxysilane is producible substantially without generation of side products such as carbon dioxide gas, which is advantageous from a viewpoint of environmental condition, as compared with the conventional processes.

Hereinafter, the present invention will be described in more detail with reference to EXAMPLES. It should be understood that the following EXAMPLES are not intended to limit the scope of the present invention, and any modifications within the range of features described above or below are also included in the technical scope of the present invention. In the EXAMPLES, the yield of alkoxysilane (mol %) is calculated by the following equation.

$$Y=100 \times Xa/S$$

Herein, Y is the yield of alkoxysilane (mol %); Xa is the total number of mole of alkoxysilane generated (mol); and S is the number of mole of silicon atom contained in inorganic compound B.

EXAMPLE 1

PREPARATION OF INORGANIC COMPOUND B

Potassium carbonate (0.46g) was dissolved in water (32g), and to the resulting solution was added, while stirring at 90°C, silica (inorganic compound A, Fuji Silysia, "Sylysia 350", $SiO_2$ purity: 99.7% by weight, 8.0g), and subsequently heated to evaporate water. The solid thus obtained was dried at 120°C for 2 hours in air. The resulting solid was crushed and filtered through #9 and #16 mesh filters. The crushed particles after filtration was further sintered at 500°C for 2 hours in air, yielding inorganic compound B. The content of potassium in inorganic compound B was 5.0 mol % with respect to 100 mol % of Si atoms.

REACTION

The particles of inorganic compound B (0.15g, Si content: 0.067g) were packed in a stainless steel reaction tube with an internal diameter of 20mm, and fixed therein by further packing glass beads at both ends of the tube. Subsequently, the particles of inorganic compound B in the reaction tube were heated up to 400°C, while supplying a nitrogen gas (50 ml/min) therein, and dried for 0.5 hour. Methanol was then fed into the reaction tube to carry out the reaction. The reaction was conducted at a temperature of 400°C and under a pressure of 4.9 MPa, while methanol was supplied at a rate of 32 g/hr with respect to 1g of inorganic compound B at the beginning of the reaction. Gradually as the reaction proceeded, a liquid product was generated and flowed out of the reaction tube. Analysis of the effluent showed that a total amount of 0.29g of tetramethoxysilane was obtained after 11 hours of reaction. In this case, the yield of tetramethoxysilane was 82 mol %.

EXAMPLE 2

An alkoxysilane (tetraethoxysilane) was prepared according to a procedure essentially identical to that of EXAMPLE 1 except that inorganic compound B was used in an amount of 0.10 g (Si content: 0.048 g), ethanol was used replacing methanol, and the reaction was carried out at 250 °C. The amount of tetraethoxysilane obtained was 0.052g after 11 hours of reaction, and the yield was 15 mol %.

EXAMPLE 3

Tetramethoxysilane was prepared according to a procedure essentially identical to that of EXAMPLE 1 except that inorganic compound B was used in an amount of 0.10 g and the reaction was carried out under 350°C and 8.3 MPa. In the reaction condition of EXAMPLE 3, methanol is in the supercritical state. Tetramethoxysilane was obtained in an amount of 0.11g after 5.5 hours of reaction, and the yield was 44 mol %.

EXAMPLE 4

Tetramethoxysilane was prepared according to a procedure essentially identical to that of EXAMPLE 1 except that the reaction pressure was 0.1 MPa. Tetramethoxysilane was obtained in an amount of 0.27 g after 22 hours of reaction, and the yield was 77 mol %.

EXAMPLE 5

PREPARATION OF INORGANIC COMPOUND B'

Inorganic compound B' was obtained in a similar manner to EXAMPLE 1 except that barium acetate(1.75g) was used in place of potassium carbonate. The barium content contained in inorganic compound B' was 5.0 mol % with respect to 100 mol % of Si atoms.

REACTION

Tetramethoxysilane was obtained in a similar manner to EXAMPLE 1 except that inorganic compound B was replaced with inorganic compound B' (0.15g, Si content: 0.063g). The amount of tetramethoxysilane obtained was 0.17 g after 11 hours of reaction, and the yield was 50 mol %.

COMPARTIVE EXAMPLE

Inorganic compound B was prepared in a similar manner to EXAMPLE 1 except that potassium carbonate was not used. With inorganic compound B thus prepared, an experiment was carried out in the similar manner as EXAMPLE 1. As a result of the experiment, tetramethoxysilane was not obtained even after 11 hours of reaction.
The results of EXAMPLES and a COMPARATIVE EXAMPLE above are summarized in TABLE 2.

TABLE 2

| | Catalyst | Alcohols | Reaction Temperature (°C) | Reaction Pressure (MPa) | Feed Rate of Alcohol per 1g of Inorganic Compound B or B' (g/hr) | Reaction Time (hr) | Yield of Alkoxysilane (mol%) |
|---|---|---|---|---|---|---|---|
| Example 1 | K | Methanol | 400 | 4.9 | 32 | 11 | 82 |
| Example 2 | K | Ethanol | 250 | 4.9 | 47 | 11 | 15 |
| Example 3 | K | Methanol | 350 | 8.3 | 32 | 5.5 | 44 |
| Example 4 | K | Methanol | 400 | 0.1 | 32 | 22 | 77 |
| Example 5 | Ba | Methanol | 400 | 4.9 | 32 | 11 | 50 |
| Comp. Example | none | Methanol | 400 | 4.9 | 32 | 11 | 0 |

In TABLE 2, the "catalyst" indicates the alkali metal and/or alkaline earth metal element present in the reaction system. The "feeding rate of alcohol" is a rate adjusted at the beginning of the reaction, and expressed in gram per hour with respect to 1 g of inorganic compound B or B' packed in the reaction tube.

As this invention may be embodied in several forms without departing from the spirit of essential characteristics thereof., the present embodiment is therefore illustrative and not restrictive, since the scope of the invention is defined by the appended claims rather than by the description preceding them, and all changes that fall within metes and bounds of the claims, or equivalence of such metes and bounds are therefore intended to embraced by the claims.

**Claims**

1. A process for producing an alkoxysilane, comprising a reaction of an inorganic compound having Si-O bond with an alcohol in the presence of an alkali metal element and/or an alkaline earth metal element.

2. A process according to claim 1, wherein said reaction is carried out at a temperature of not lower than 200°C.

3. A process according to claim 2, wherein said temperature is not lower than the critical temperature of said alcohol.

4. A process according to claim 2 or 3, wherein said reaction is carried out under a pressure of not lower than $0.1 \times Pc$ (MPa), when the critical pressure of said alcohol is designated as Pc (MPa).

5. A process according to any one of claims 1 to 4, wherein said alcohol is methanol.

6. A process according to any one of claims 1 to 5, wherein said alkoxysilane is tetramethoxysilane.

**European Patent Office**

## EUROPEAN SEARCH REPORT

Application Number

EP 02 02 8726

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2 881 198 A (BAILEY DONALD L ET AL) 7 April 1959 (1959-04-07) * the whole document * | 1-6 | C07F7/18 |
| Y | LAINE R M ET AL: "SYNTHESIS OF PENTACOORDINATE SILICON COMPLEXES FROM SIO2" NATURE, MACMILLAN JOURNALS LTD. LONDON, GB, vol. 353, no. 353, October 1991 (1991-10), pages 642-644, XP000892184 ISSN: 0028-0836 * the whole document * | 1,5,6 | |
| Y | US 5 440 011 A (LAINE RICHARD M) 8 August 1995 (1995-08-08) * column 6, line 67 - column 7, line 66 * | 1,5,6 | |
| Y | CHENG H ET AL: "Neutral alkoxysilanes from silica" JOURNAL OF THE AMERICAN CHEMICAL SOCIETY, vol. 122, no. 41, 18 October 2000 (2000-10-18), pages 10063-10072, XP002230878 ISSN: 0002-7863 * page 10063 - page 10064 * | 1,5,6 | TECHNICAL FIELDS SEARCHED (Int.Cl.7) C07F |
| Y | ROSENHEIM A ET AL: "Über innerkomplexe Brenzcatechinate vierwertiger Elemente" ZEITSCHRIFT FÜR ANORGANISCHE UND ALLGEMEINE CHEMIE, vol. 196, 1931, pages 160-176, XP009005484 ISSN: 0044-2313 * page 162 - page 163 * | 1,5,6 | |

-/--

The present search report has been drawn up for all claims

| Place of search | Date of completion of the search | Examiner |
|---|---|---|
| MUNICH | 12 February 2003 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 323 722 A1

### European Patent Office

### EUROPEAN SEARCH REPORT

**Application Number**

EP 02 02 8726

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | HOPPE M L ET AL: "Ba[Si(OCH2CH2O)3], a hexaalkoxysilicate synthesized from SiO2" ANGEWANDTE CHEMIE, INTERNATIONAL EDITION, vol. 32, no. 2, 1993, pages 287-289, XP001135234 ISSN: 0570-0833 * the whole document * | 1,5,6 | |
| Y | BOUDIN A ET AL: "Reactivity of dianionic hexacoordinated silicon complexes towards nucleophiles: a new route to organosilanes from silica" ORGANOMETALLICS, vol. 7, no. 5, 1988, pages 1165-1171, XP002230879 ISSN: 0276-7333 * the whole document * | 1,5,6 | |
| D,Y | EP 1 078 930 A (GENERAL ELECTRIC COMPANY) 28 February 2001 (2001-02-28) * the whole document * | 1,5,6 | |
| D,Y | PATENT ABSTRACTS OF JAPAN vol. 2000, no. 09, 13 October 2000 (2000-10-13) & JP 2000 178283 A (MITSUI CHEMICALS INC), 27 June 2000 (2000-06-27) * abstract * | 1,5,6 | **TECHNICAL FIELDS SEARCHED (Int.Cl.7)** |
| D,Y | PATENT ABSTRACTS OF JAPAN vol. 011, no. 332 (C-455), 29 October 1987 (1987-10-29) & JP 62 114991 A (TONEN SEKIYUKAGAKU KK), 26 May 1987 (1987-05-26) * abstract * | 1,5,6 | |

-/--

The present search report has been drawn up for all claims

| Place of search | Date of completion of the search | Examiner |
|---|---|---|
| MUNICH | 12 February 2003 | Elliott, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

9

**European Patent Office**

**EUROPEAN SEARCH REPORT**

Application Number

EP 02 02 8726

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | PATENT ABSTRACTS OF JAPAN<br>vol. 017, no. 185 (C-1047),<br>12 April 1993 (1993-04-12)<br>& JP 04 338393 A (NIPPON SHOKUBAI CO LTD),<br>25 November 1992 (1992-11-25)<br>* abstract *<br>----- | 1,5,6 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 12 February 2003 | Elliott, A |

**ANNEX TO THE EUROPEAN SEARCH REPORT
ON EUROPEAN PATENT APPLICATION NO.**                                        EP 02 02 8726

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2003

| Patent document cited in search report | | Publication date | Patent family member(s) | | Publication date |
|---|---|---|---|---|---|
| US 2881198 | A | 07-04-1959 | NONE | | |
| US 5440011 | A | 08-08-1995 | US | 5216155 A | 01-06-1993 |
| | | | US | 5099052 A | 24-03-1992 |
| | | | AU | 6358694 A | 26-09-1994 |
| | | | WO | 9420507 A1 | 15-09-1994 |
| | | | WO | 9310128 A1 | 27-05-1993 |
| | | | CA | 2080358 A1 | 14-10-1991 |
| | | | EP | 0525074 A1 | 03-02-1993 |
| | | | JP | 5508622 T | 02-12-1993 |
| | | | WO | 9116328 A1 | 31-10-1991 |
| EP 1078930 | A | 28-02-2001 | US | 6288257 B1 | 11-09-2001 |
| | | | EP | 1078930 A2 | 28-02-2001 |
| | | | JP | 2001114786 A | 24-04-2001 |
| JP 2000178283 | A | 27-06-2000 | NONE | | |
| JP 62114991 3 | A | | NONE | | |
| JP 04338393 3 | A | | NONE | | |

EPO FORM P0459

For more details about this annex : see Official Journal of the European Patent Office, No. 12/82